# NEUE EUROPÄISCHE PATENTSCHRIFT

(11) **EP 0 649 722 B2**
(45) Veröffentlichungstag und Bekanntmachung des Hinweises auf die Entscheidung über den Einspruch: **02.03.2005**
(45) Hinweis auf die Patenterteilung: 10.03.1999
(21) Anmeldenummer: 94115904.8
(22) Anmeldetag: 08.10.1994
(51) Int. Cl.: B29C 45/82, F15B 11/02, F04B 49/06

(54) **Hydraulikeinrichtung**
Hydraulic device
Dispositif hydraulique

(30) Priorität: 18.10.1993 DE 4335403
(43) Veröffentlichungstag der Anmeldung: 26.04.1995
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 403 041
- EP-A- 0 558 934
- DE-A- 2 202 223
- DE-C- 4 234 647
- FR-A- 2 506 041
- PATENT ABSTRACTS OF JAPAN vol. 17 no. 410 (M-1455) ,30.Juli 1993 & JP-A-05 084799 (UBE IND LTD) 6.April 1993,

## Beschreibung

Die Erfindung betrifft eine Hydraulikeinrichtung zur Versorgung einer Arbeitseinheit, insbesondere einer Arbeitseinheit an einer Kunststoff-Spritzgießmaschine nach dem Oberbegriff des Anspruches 1.

Eine derartige Hydraulikeinrichtung ist aus der DE-PS 31 19 095 für den hydraulischen Kreislauf einer Kunststoff-Spritzgießmaschine bekannt, wobei mit einer druckstromgeregelten Verstellpumpe und einem Regelventil als Verstelldrossel energetisch günstig der Volumenstrombedarf an den Verbraucher angepaßt wird. Zu diesem Zweck greift eine Steuerleitung den Druck nach dem den Volumenstrom zum Verbraucher lenkenden Regelventil ab, der als Eingangsgröße an das Regelorgan gegeben wird. Diese Eingangsgröße wird um ein vorgegebenes Betriebsdruckgefälle erhöht, so daß der Druckabfall über das Regelventil konstant gehalten wird. Die Regelpumpe wird während der gesamten Zeit in Maximalleistung gefahren, so daß auch bei Zyklusabschnitten, in denen keine großen Volumenmengen gefördert werden müssen, eine grobe Leckage im Pumpenbereich auftritt. Darüber hinaus muß über die ganze Zeit die Maximaldrehzahl der Pumpe vorgehalten werden. Eine Regelung über einen Frequenzregler ist hier nicht vorgesehen.

Aus der JP-A 05 084799 ist es bekannt, an einer Spritzgießmaschine eine Konstant-Verstellpumpe zu verwenden, die über einen Invertermotor angetrieben wird. Der Inverter-Motor beeinflußt die von der Pumpe gelieferte Fluidmenge. Eine Regelung der Pumpe ist nicht vorgesehen.

Aus der EP-A 0 558 934 ist es bekannt, zur Regelung der Hubgeschwindigkeit eines Aufzugs entweder eine Verstellpumpe mit veränderlichem Verdrängungsvolumen, gesteuert durch ein Druckregelungsventil oder alternativ eine Verdrängerpumpe mit konstantem Verdrängervolumen zur Energieeinsparung vorzusehen, welche durch einen frequenzgeregelten Elektromotor angetrieben wird. Beide Alternativen tragen für sich bereits zur Energieeinsparung bei, so daß eine Kombination beider Verfahren, weder für das dortige Einsatzgebiet, noch für das Gebiet der Spritzgießmaschinen vorgeschlagen wurde, da die erzielte Energieeinsparung als ausreichend erachtet wurde.

Nach der DE-A 39 19 823 sind die hydraulischen Verbraucher in einer Hydraulikeinrichtung mit Pumpen verbunden, die von Wechselstrom-Servomotoren angetrieben werden. Da zwischen den Pumpen und den hydraulischen Verbrauchern keine hydraulischen Steuerungselemente zur Regelung verwendet werden, arbeiten diese Systeme nach dem Prinzip des hydrostatischen Getriebes. Die Geschwindigkeitsregelung erfolgt durch Verändern der Motordrehzahl. Durch diese Maßnahme kann eine energiearme und geräuschoptimierte Betriebsweise der Verbraucher erzielt werden. Dabei wird der Nachteil der verhältnismäßig teuren Wechselstrom-Servomotoren bewußt in Kauf genommen. Ergänzend hierzu auch die Pumpe selbst druckabhängig aktiv zu regeln, wobei als Regelparameter das Betriebsdruckgefälle verwendet wird, ist nicht beabsichtigt. Zwar zeigt die dortige Fig. 4 einen in sich geschlossenen Geschwindigkeitsregelkreis, jedoch keine Rückführung von der Pumpe oder der Verbraucherleitung zum Regelkreis.

Aus der DE-A 22 02 223 ist ein frequenzgeregelter Antriebsmotor entnehmbar, eine Regelung der Pumpe an sich wird dort jedoch nicht vorgeschlagen.

Aus der EP-A 464 286 ist eine Hydraulikeinrichtung bekannt, bei der die Menge des mit einer Verstellpumpe geförderten Hydrauliköls mittels der Drehzahl des die Verstellpumpe antreibenden Elektromotors gesteuert wird.

Aus der österreichischen Patentanmeldung A 653/89 ist es bekannt, zur Energieeinsparung einen eine Hydraulikpumpe antreibenden Drehstrommotor hinsichtlich seiner Leistung mittels eines Frequenzumformers an die jeweiligen hydraulischen Erfordernisse anzupassen.

Ausgehend von diesem Stand der Technik liegt der vorliegenden Erfindung die Aufgabe zugrunde, eine Hydraulikeinrichtung der eingangs genannten Gattung derart weiterzubilden, daß eine Regelung oder Steuerung der Verbraucher preiswert und energiesparsam möglich ist.

Diese Aufgabe wird durch die Merkmale des Anspruches 1 gelöst.

In der Praxis konnte durch umfangreiche Versuche festgestellt werden, daß die Leerlaufverluste von Verstellpumpen bei geringen Antriebsdrehzahlen deutlich abnehmen. Im Nullhubbetrieb, d.h. die Pumpe fördert nur einen geringen Förderstrom zur Aufrechterhaltung des eingestellten Systemdruckes, reduziert sich z.B. die Leerlaufantriebsleistung bei 500 U/min um ca. 50%. Wird daher eine derartige Verstellpumpe mit einer variablen Antriebsdrehzahl betrieben, können die Vorteile einer günstigen Verstellpumpe ausgenutzt werden, und dennoch ist aufgrund der Veränderung der Antriebsdrehzahl eine Energieeinsparung zu verwirklichen.

Im Gegensatz zu den teuren Drehstrom-Servomotoren erfolgt die Steuerung der Antriebsdrehzahl mit einem serienmäßigen, preiswerten Drehstrom-Synchranmotor, der mittels eines Frequenzumrichters in der Drehzahl gesteuert wird. Den erforderlichen Drehzahl-Sollwert berechnet die übergeordnete Steuerung aus den programmierten Geschwindigkeitsprofilen und dem Pumpendruck-Ist-Wert. Im Spritzbetrieb reduziert sich die Energieaufnahme des Motors bei mittleren Schußzahlen von 2-4 Schuß/min. um ca. 20-35%.

Zwar kann die Pumpenleistung nicht wie bei einem Drehstrom-Servomotor bis auf Null heruntergefahren werden, jedoch ist dies auch nicht unbedingt erforderlich, da stets ein Minimaldruck für das Hydrauliksystem beibehalten werden muß.

Die Maximalleistung wird stets nur auf den für den jeweiligen Spritzzyklus oder Teil des Spritzzyklus erforderlichen Maximalwert eingestellt. In diesem Bereich setzt der Frequenzumrichter ein. Für die dann weiter innerhalb des einzelnen Ablaufes erforderlichen Druckänderungen wird weitgehend eine Nachführung des Betriebsdruckgefälles in aus der DE-PS 31 19 095 bekannten Weise durchgeführt.

Eine Ausbildung nach Anspruch 3 ermöglicht außerdem eine größere Dynamik der Hydraulik.

Im folgenden wird die Erfindung anhand eines Ausführungsbeispiels näher erläutert. Es zeigen:
- Fig. 1: eine schematische Darstellung des Hydraulikkreislaufes,
- Fig. 2: eine schematische Darstellung eines beispielhaften Spritzzyklus.

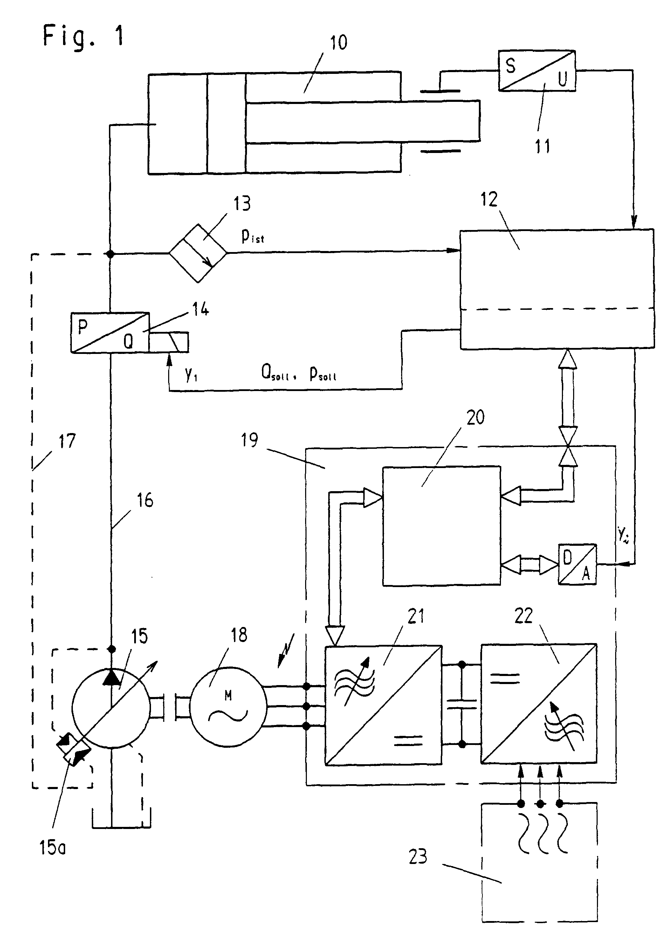

In Fig. 1 ist eine Arbeitseinheit 10, beispielsweise eine Kolben-Zylinder-Einheit einer Kunststoff-Spritzgießmaschine dargestellt. Diese Arbeitseinheit wird von einer Pumpe 15 über die Verbraucherleitung 16 mit Hydraulikmedium versorgt, wobei ein Proportionatmengenventil eine Verteilung des Hydraulikmediums zur Arbeitseinheit vornimmt. Dieses Ventil 14 wird über einen Stellwert y₁ von einer Steuerung 12 eingestellt. Dieser Stellwert y₁ entspricht Soll-Vorgaben an die Menge (Q_{Soll}) und den Druck (p_{Soll}). Die Position der Arbeitseinheit wird über einen Streckenspannungswandler 11 erfaßt, der ein entsprechendes Signal ebenfalls an die Steuerung 12 liefert.

Über die Steuerleitung 17 wird der Druck nach dem Ventil 14 als Druck-Ist-Wert erfaßt und dem Regelorgan 15a der Pumpe 15 zugeführt. Gleichzeitig wird der Druck vor dem Ventil 14 erfaßt, so daß aufgrund dieser beiden Werte bei vorgegebener Einstellung der Regelpumpe ein konstantes Betriebsdruckgefälle aufrecht erhalten werden kann. Dies ermöglicht eine schnelle Nachführung des gesamten Systems an sich ändernde Verhältnisse. Der Druck in der Verbraucherleitung 16 nach dem Ventil wird auch über einen Druckfühler als Druck-Ist-Wert p_{Ist} der Steuerung übermittelt. Die Pumpe 15 wird über einen Drehstrommotor 18 angetrieben. Dieser Drehstrommotor wird über einen Frequenzumrichter an das Stromnetz angeschlossen, der die Stromfrequenz in einem gewissen Bereich moduliert, üblicherweise zwischen 10 und 50 Hertz. Die Steuerung kommuniziert mit dem Controller 20 des Frequenzumrichters. Aufgrund von voreingegebenen Werten für den Spritzzyklus oder Teile eines Spritzzyklus wird eine Stellgröße y₂ von der Steuerung und über den Digital-Analog-Wandler an den Controller 20 geliefert. Der Controller 20 gibt eine entsprechende Weisung an den Frequenzregler 21 für den Drehstrommotor 18. Der Frequenzregler selbst wird aus dem Schaltschrank 23 mit Energie versorgt. Der Schaltschrank 23 ist dabei über einen Zwischenkreis 22 mit dem Frequenzregler verbunden, wobei der Zwischenkreis als kapazitativer Puffer beim Bremsen und Beschleunigen des Motors dienen kann.

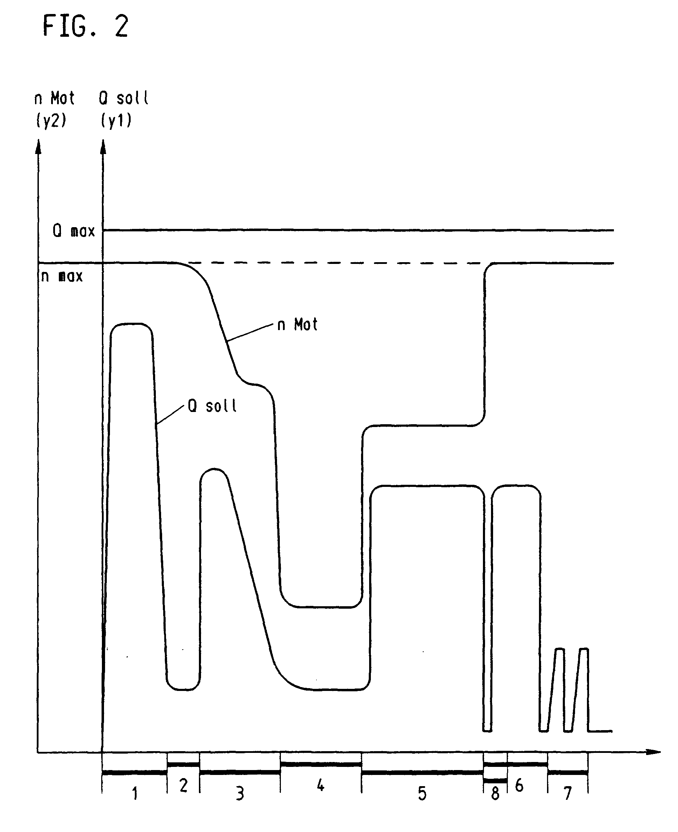

Die Hydraulikeinrichtung arbeitet grundsätzlich so, daß die maximale Pumpenleistung in Abhängigkeit der für den jeweiligen Spritzzyklus vorgegebenen Werte auf eine für den einzelnen Spritzzyklus oder für einen Teil eines Spritzzyklus erforderliche Maximalleistung reduziert wird, wie sich dies aus Fig. 2 ergibt. In diesem Diagram ist für einen beispielhaften Spritzzyklus Q_{Soll} entsprechend der Stellgröße y₁ und nₘₒₜ entsprechend der Stellgröße y₂ über die Zeit aufgetragen. Darüberhinaus sind die der Maximalleistung entsprechenden Werte Qₘₐₓ und nₘₐₓ eingezeichnet. Die an der Koordinate aufgetragenen Zahlen stehen für einzelne Abschnitte des Spritzzyklus. Es bedeuten:
- 1: Werkzeug schließen
- 2: Ptastifiziereinheit vorfahren
- 3: Einspritzen
- 4: Nachdruckphase
- 5: Dosieren
- 6: Werkzeug öffnen
- 7: Auswerferbewegung
- 8: Plastifiziereinheit zurückfahren

Unterhalb der der jeweils mindestens erforderlichen Maximalleistung entsprechenden Motordrehzahl n ₘₒₜ wird nach Möglichkeit die restliche Regelung in Zusammenarbeit zwischen Steuerleitung 17 und Regelorgan 15a geregelt. Während somit bei den meisten Teilen eines Spritzzyklus zumindest geringe Einsparungen gegenüber der Maximalleistung der Pumpe ersichtlich sind, ergibt sich doch ganz deutlich, z.B. beim Dosieren 5 und in der Nachdruckphase 4 eine erhebliche Reduzierung der Motordrehzahl nₘₒₜ für diesen Teil mit einer entsprechenden Verringerung an Energieaufwand.

Um gegebenenfalls die Dynamik des gesamten Systems zu erhöhen und somit evtl. auch den Einfluß von der Stellgröße y₂ auf den Gesamtablauf noch weiter zu steigern, kann ein Drehzahlgeber die Drehzahl des Drehstrommotors 18 abgreifen und diese Drehzahl ebenfalls als Eingangsgröße der Steuerung zuleiten, so daß die Drehzahl unterlagert mittels des Frequenzumrichters geregelt wird. In diesem Moment nimmt die Bedeutung der weiteren Stellgröße y₁ noch stärker ab.

Der Regelpumpe 15 ist also ein in der Drehzahl regelbarer Drehstrommotor in Form einer Kaskadenregelung überlagert.

## Patentansprüche

1. Hydraulikeinrichtung zur Versorgung einer Arbeitseinheit (10) an einer Kunststoff-Spritzgießmaschine mit einer Steuerung zur Steuerung wenigstens einer Regelpumpe (15), einer von der Regelpumpe (15) zur Arbeitseinheit (10) führenden Verbraucherleitung (16), wenigstens einem in der Verbraucherleitung (16) angeordneten, Menge (Q_{Ist}) und Druck (P_{Ist}) bestimmenden steuer- oder regelbaren Ventil (14), einer Steuerleitung (17), die das Regelorgan (15a) der Regelpumpe (15) mit der Verbraucherleitung (16) nach dem Ventil (14) verbindet, sowie wenigstens einem Druckfühler (13) zur Erfassung von Druck-Ist-Werten nach dem Ventil (14), die nach Vergleich mit einem Druck-Soll-Wert (P_{Soll}) eine Stellgröße (y₁) für das Regelorgan (15a) liefern zur Nachführung des Betriebsdruckgefälles bis zum Druckfühler (13),
**dadurch gekennzeichnet, dass** die Regelpumpe (15) von einem an sich bekannten Drehstrommotor (18) angetrieben ist, der über einen an sich bekannten Frequenzumrichter (19) in der Drehzahl (nₘₒₜ) derart regelbar an das Stromnetz angeschlossen ist, dass die Maximalleistung (Qₘₐₓ) der Regelpumpe (15) aufgrund von für den jeweiligen Spritzzyklus vorgegebenen Werten in Abhängigkeit einer von Menge und Druck abhängigen Stellgröße (y₂) durch den Frequenzumrichter vorgegeben wird und dass die Pumpenleistung der Regelpumpe (15) unterhalb ihrer Maximalleistung am Regelorgan (15a) durch die Stellgröße (y₁) von der Steuerung (12) aktiv regelbar ist.

2. Hydraulikeinrichtung nach Anspruch 1, **dadurch gekennzeichnet, dass** die Stellgröße (y₂) für einzelne Abschnitte eines Spritzzyklus gesondert berechnet ist.

3. Hydraulikeinrichtung nach einem der vorhergehenden Ansprüche, **dadurch gekennzeichnet, dass** ein Drehzahlgeber die Drehzahl des Drehstrommotors (18) abgreift und dass die Drehzahl unterlagert mittels des Frequenzumrichters (19) geregelt ist.

## Claims

1. Hydraulic device for supplying a driving unit (10) in an injection moulding machine for processing plastics materials, comprising a control for controling at least one control pump (15), a main line (16) extending from the control pump (15) to the driving unit (10), at least one controllable or adjustable valve (14) which is disposed in the main line (16) and determines quantity (Q_{actual}) and pressure (P_{actual}), a control line (17) which connects the adjusting mechanism (15a) of the control pump (15) to the main line (16) downstream of the valve (14), and at least one pressure sensor (13) for determining actual pressure values downstream of the valve (14), which values, after comparison with a desired pressure value (P_{desired}), supply a correcting variable (y₁) for the adjusting mechanism (15a) in order to follow-up the operational pressure gradient as far as the pressure sensor (13), **characterised in that** the control pump (15) is driven by a rotary current motor (18) known per se, which is connected to the current source via a frequency converter (19) known per se so as to be adjustable in respect of the speed (nₘₒₜ), so that the maximum capacity (Qₘₐₓ) of the control pump (15) is predetermined by the frequency converter, by virtue of values prescribed for the respective injection cycle, in dependence on a correcting variable (y₂), which is dependent on quantity and pressure, and **in that** the pumping capacity of the control pump (15) is actively adjustable by the control (12) below its maximum capacity at the adjusting mechanism (15a) by the correcting variable (y₁).

2. Hydraulic device according to claim 1, **characterised in that** correcting variable (y₂) is calculated separately for individual sections of an injection cycle.

3. Hydraulic device according to one of the preceding claims, **characterised in that** a speed transmitter picks-up the speed of the rotary current motor (18) and **in that** the speed is adjusted by means of the frequency converter (19).

## Revendications

1. Dispositif hydraulique d'alimentation d'une unité de travail (10) d'une machine d'injection de matière plastique, qui comprend une commande à commander au moins une pompe à débit variable (15), une conduite de branchement (16) reliant la pompe à débit variable (15) à l'unité de travail (10), au moins une vanne de régulation (14) montée sur la conduit de branchement (16) et déterminant un débit (Qᵢₛₜ)et une pression (Pᵢₛₜ), une ligne de commande (17) qui relie l'organe de régulation (15a) de la pompe à débit variable (15) à la conduite de branchement (16) après la vanne de régulation (14), et qui comprend au moins un capteur de pression (13) pour mesurer des valeurs de la pression après la vanne de régulation (14), lesquelles fournissent à l'organe de régulation (15a) une valeur de réponse (y₁) par comparaison avec une valeur de consigne de la pression (Pₛₒₗₗ) pour maintenir la différence de pression nominale jusqu'au capteur de pression (13), **caractérisé en ce que** la pompe à débit variable (15) est commandée par un moteur triphasé (18) connu en soi, dont le nombre de tours (nₘₒₜ) est réglé par un modulateur de fréquences (19) connu en soi et par l'intermédiaire duquel il est relié au secteur de façon, que la puissance maximale (Qₘₐₓ) de la pompe à débit variable (15) est allouée par le modulateur de fréquences sur la base de valeurs préétablies pour chaque cycle d'injection, en fonction d'une valeur de réponse (y₂) dépendant du débit et de la pression, et **en ce que** la puissance de la pompe à débit variable (15)est réglable en dessous de son maximum par l'orange de régulation (15a) par l'intermédiaire de la valeur de réponse (y₁) délivrée par une commande (12).

2. Dispositif hydraulique selon la revendication 1, **caractérisé en ce que** la valeur de réponse (x2) est calculée de façon particulière pour chaque période du cycle d'injection.

3. Dispositif hydraulique selon l'une quelconque des revendications précédentes, **caractérisé en ce qu'**un transmetteur de vitesse mesure le nombre de tours du moteur triphasé (18) et **en ce que** le nombre de tours donné est réglé au moyen du modulateur de fréquences (19).
